# EUROPÄISCHE PATENTSCHRIFT

(11) **EP 0 794 590 B1**
(45) Veröffentlichungstag und Bekanntmachung des Hinweises auf die Patenterteilung: **04.12.2002**
(21) Anmeldenummer: 97103429.3
(22) Anmeldetag: 03.03.1997
(51) Int. Cl.: H01R 4/24, H01R 9/24

(54) **Anschlussmodul für die Telekommunikationstechnik**
Communication link module for telecommunication
Module de raccordement pour télécommunication

(30) Priorität: 05.03.1996 DE 19608517
(43) Veröffentlichungstag der Anmeldung: 10.09.1997
(60) Teilanmeldung: 02013427.6
(73) Patentinhaber: Quante Aktiengesellschaft, 42109 Wuppertal (DE)
(72) Erfinder: Burmeister, Klaus-Dieter, 42111 Wuppertal (DE); Edelmann, Wolfgang, 42111 Wuppertal (DE); Gaertner, Norbert, 42285 Wuppertal (DE); Otto, Hans-Dieter, 51688 Wipperfürth (DE); Weber, Helmut, 42113 Wuppertal (DE)
(74) Vertreter: Füchsle, Klaus, Dipl.-Ing.

(56) Entgegenhaltungen:
- EP-A- 0 413 978
- EP-A- 0 637 853
- DE-A- 3 345 803
- DE-C- 3 014 796
- DE-C- 3 311 459
- DE-C- 3 909 783
- DE-C- 3 917 270
- DE-C- 3 921 227
- DE-C- 4 325 614
- DE-U- 9 407 659
- US-A- 4 846 735
- US-A- 4 851 967
- US-A- 5 224 881
- US-A- 5 341 269

## Beschreibung

Die vorliegende Erfindung betrifft ein Anschlußmodul für die Telekommunikationstechnik nach dem Oberbegriff des Patentanspruchs 1. Derartige Anschlußmodule werden beispielsweise an der Übergabestelle unterschiedlicher Netzbetreiber von Telekommunikations- und Datenleitungen eingesetzt. Hierdurch ist es möglich, z.B. öffentliche Kabelnetze von denen privater Netzbetreiber bei auftretenden Übertragungsfehlern zu trennen und zu prüfen. Hierbei kann es wünschenswert sein, zum Schutz der Netze Überspannungsableiter und/oder Feinschutzstecker im Bereich des Anschlußmodules einzusetzen. Ebenso ist ein passiver Prüfabschluß für den Abschluß des öffentlichen Netzes einsetzbar. Für unterbrechungslose Umschaltungen können Umschaltadapter vorgesehen werden.

Ein Anschlußmodul nach dem Oberbegriff des Patentanspruchs 1 ist aus der DE 33 11 459 C2 bekannt. Das bekannte Anschlußmodul weist Anschlußkontakte für Kabeladern sowie Kontakte für Überspannungsbauteile auf. Durch Zerlegen des Gehäuses und Austauschen der Erdungsschiene kann das bekannte Anschlußmodul derart umgerüstet werden, dass alternativ in eine jeweilige Ausnehmung ein 3-Poll-Überspannungsableiter oder zwei 2-Pol-Überspannungsableiter einsetzbar sind. Eine derartige Umrüstbarkeit, bei der das Gehäuse zerlegt werden muß, ist jedoch in der Praxis nachteilhaft.

Aus der US 4,851,967 ist ein Anschlußmodul bekannt, das zwei gegenüberliegende Reihen von Schneidklemmkontakten aufweist, mit denen insgesamt fünf Doppeladern ankommend und abgehend kontaktiert werden können. Zwischen den einander gegenüberliegenden Schneidklemmkontakten einer Ader sind verschiedene Steckbuchsen vorgesehen, um Schutz- oder Prüfstecker einzustecken.

Das bekannte Anschlußmodul weist an seiner Unterseite Rasthaken auf, die dazu dienen, das Anschlußmodul auf eine Profilschiene aufzurasten. Auf dieser Profilschiene können mehrere Anschlußmodule in Reihe befestigt werden, wobei das jeweils äußerste Modul mit einer Schraube an der Profilschiene gesichert wird. Somit können zwar mehrere Module auf der Profilschiene nebeneinander befestigt werden, jedoch können mit diesem Anschlußmodul nur Doppeladeranschlüsse in einer Anzahl bereitgestellt werden, die dem Vielfachen von 5 entspricht. Sofern Anschlüsse mit lediglich zwei Doppeladern oder mit vier, sechs oder acht Doppeladern gewünscht werden, sind bei dem bekannten Anschlußmodul entweder zuviel oder zuwenig Anschlußmöglichkeiten vorhanden. Ein weiterer Nachteil besteht darin, daß sich das bekannte Anschlußmodul nur unter Zuhilfenahme einer Profilschiene anreihen läßt. Schließlich ist dieses bekannte Anschlußmodul auch hinsichtlich der Anbringbarkeit von Überspannungsgasableitern unflexibel gestaltet.

Der vorliegenden Erfindung liegt die Aufgabe zugrunde, ein Anschlußmodul nach dem Oberbegriff des Anspruchs 1 zu schaffen, das bei verringerten Fertigungskosten Einsatzmöglichkeiten aufweist, die um ein Vielfaches erhöht sind, und das leicht umgerüstet und in flexibler Weise mit Überspannungsgasableitern versehen werden kann.

Die Lösung dieser Aufgabe erfolgt durch ein Anschlußmodul mit den Merkmalen des Patentanspruchs 1.

Demzufolge ist in dem Gehäuse des Anschlußmodules eine Ausnehmung vorgesehen, die eine solche Größe besitzt, daß von oben entweder ein 3-Pol-Überspannungsgasableiter oder alternativ zwei 2-Pol-Überspannungsgasableiter je Doppelader einsetzbar sind. Durch diese äußerst vorteilhaften Merkmale, die im übrigen bei jedem beliebigen Anschlußmodul Verwendung finden können, ergibt sich der große Vorteil, daß ein und dasselbe Anschlußmodul für unterschiedliche Überspannungsgasableiter Verwendung finden kann. Auch ist hierdurch die Servicefreundlichkeit erhöht, da der Monteur oder Kundendienstmonteur wahlweise 2-Pol- oder 3-Pol-Überspannungsgasableiter einsetzen kann, wenn ihm beispielsweise nur eine dieser beiden Varianten zur Verfügung steht.

Ferner ist ein Kontaktelement mittig in der zumindest einen Ausnehmung lösbar an einem Erdkontakt angeordnet. Das Kontaktelement stellt eine leitende Verbindung zu einem Erdkontakt her und ermöglicht für das erfindungsgemäße Anschlußmodul eine vereinfachte Herstellung und ein leichtes Umrüsten.

Vorteilhafte Ausführungsformen der Erfindung sind durch die Unteransprüche gekennzeichnet.

Nach einer vorteilhaften Ausbildung der Erfindung kann in dem Gehäuse ein flächiges Kontaktelement mit zwei nebeneinanderliegenden, im wesentlichen U-förmigen Öffnungen befestigt sein, in die jeweils ein 3-Pol-Überspannungsgasableiter mit seinem (mittleren) Erdkontakt einsetzbar ist, um eine leitende Verbindung zwischen den beiden Erdkontakten der nebeneinanderliegenden Überspannungsableiter herzustellen. Dieses flächige Kontaktelement stellt dabei gleichzeitig eine leitende Verbindung zu einer Erdschiene oder einem Erdanschluß her. Alternativ kann ein flächiges Kontaktelement ohne Öffnungen vorgesehen sein, um dann insgesamt vier "kleeblattförmig" nebeneinanderliegende Überspannungsgasableiter zu kontaktieren.

In einer bevorzugten Weiterbildung wird ein Anschlußmodul geschaffen, das zum Kontaktieren von genau zwei Doppeladern dient. Hierdurch läßt sich durch Kombinieren mit weiteren gleichartigen Anschlußmodulen jede durch 2 teilbare Paarzahl erreichen. Gleichzeitig sind hierdurch die Fertigungskosten deutlich gesenkt, da das Anschlußmodul kleiner gebaut werden kann und keine überflüssigen Kontaktierungsmöglichkeiten vorhanden sind.

In dieser Ausführungsform schafft die Erfindung ein äußerst flexibles Anschlußmodul, das aufgrund seiner geringen Größe universell eingesetzt werden kann, wobei gleichzeitig die Herstellungskosten beachtlich gesenkt sind, da für beliebige Paarzahlen lediglich eine Ausführungsform eines Anschlußmodules hergestellt werden muß.

Nach einer weiteren vorteilhaften Ausbildung der Erfindung können an einem Anschlußmodul zwischen zwei Schneidklemmkontakten für eine Ader zwei Kontaktzungen vorgesehen sein, auf die jeweils eine Kontaktfeder zur Kontaktierung eines Überspannungsgasableiters aufsteckbar ist. Hierdurch lassen sich die Überspannungsgasableiter auf einfache Weise mit nur wenigen Bauteilen kontaktieren, wobei die Kontaktfedern beim Aufstecken mit dem Anschlußkontakt verklemmt werden, so daß die Überspannungsgasableiter auch ausgetauscht werden können, ohne daß sich die Kontaktfedern lösen. Hier kann es vorteilhaft sein, die Kontaktfedern mit einem Vorsprung zu versehen, der gegenüber einem Gehäusevorsprung verriegelt, um ein Herausziehen der Kontaktfedern beim Entfernen des Überspannungsgasableiters zu verhindern.

Bevorzugt ist an der Gehäuseunterseite eine Rastaufnahme für eine Erdkontaktfeder vorgesehen.

Nach einer weiteren vorteilhaften Ausführungsform der Erfindung weist der Anschlußkontakt des Anschlußmodules zumindest einen Schneidklemmkontakt auf, dessen Schneidklemmschlitz so ausgebildet ist, daß auf den Schneidklemmkontakt auch bei bereits im Schneidklemmschlitz angeschalteter Ader von oben eine Kontaktfeder eines Prüfabschlusses oder dergleichen an den Schneidklemmkontakt aufgesteckt werden kann. Gleichzeitig ist das Gehäuse des Anschlußmodules so ausgebildet, daß dieses hinter dem genannten Schneidklemmkontakt einen Freiraum zur Aufnahme des Prüfabschlusses oder dergleichen aufweist. Hierdurch ergibt sich der große Vorteil, daß der Schneidklemmkontakt, der bislang ausschließlich zum Kontaktieren der ankommenden oder abgehenden Ader verwendet wurde, eine Doppelfunktion besitzt, um zusätzlich einen Prüfabschluß oder dergleichen zu kontaktieren. Diese zweifache Verwendung eines Schneidklemmkontaktes ist dabei nicht auf eine Anwendung bei einem erfindungsgemäßen Anschlußmodul beschränkt. Da das Gehäuse des Anschlußmodules einen speziellen Freiraum für diesen Prüfabschluß aufweist, der hinter dem Schneidklemmkontakt angeordnet ist, bleibt der Prüfabschluß im Bereich des Anschlußmodulgehäuses geschützt und stört nicht das Einstecken weiterer Prüf- oder Trennstecker.

In einer bevorzugten Weiterbildung dieser Ausführungsform ist das Anschlußmodul so ausgebildet, daß der Prüfabschluß auch bei eingesetztem Überspannungsgasableiter in den Freiraum einsetzbar ist.

Nach einer weiteren vorteilhaften Ausführungsform der Erfindung ist im Gehäuse eine Öffnung vorgesehen, die den Zugang zu einer Trenn- oder Anschlußstelle ermöglicht, die sich zwischen zwei gegenüberliegenden Schneidklemmkontakten befindet. Hierbei ist die Öffnung vorzugsweise in einem Abstand zu dem Freiraum ausgebildet, so daß ein Trenn- oder Prüfstecker auch dann noch in die Trenn- oder Anschlußstelle eingesteckt werden kann, wenn sich in dem Freiraum bereits ein Prüfabschluß befindet. Somit besitzt diese Ausführungsform eine deutlich erhöhte Flexibilität.

Nach einer weiteren vorteilhaften Ausführungsform besitzt jeder Anschlußkontakt zwei Schneidklemmkontakte für jede Einzelader (ankommend bzw. abgehend), die auf einer Geraden angeordnet sind, die parallel zu den beiden Außenwänden verläuft. Durch dieses Merkmal, das grundsätzlich aus der eingangs genannten US 4,851,967 bereits bekannt ist, ergibt sich der Vorteil, daß der Monteur sofort erkennt, welche gegenüberliegenden Schneidklemmkontakte einander zugeordnet sind. Demgegenüber besitzen andere bekannte Anschlußmodule eine versetzte Anordnung der Schneidklemmkontakte, welche die Zuordnung erschweren.

Besonders vorteilhaft ist es ferner, wenn der Abstand zwischen den beiden Schneidklemmkontakten einer Doppelader (a, b) und der Abstand zwischen zwei benachbarten Schneidklemmkontakten zweier Doppeladern (a1, b1) eines Moduls unterschiedlich groß ist. Durch diese ebenfalls grundsätzlich aus der obengenannten US-Patentschrift bekannte Ausführungsform ist die Montagefreundlichkeit ebenfalls erhöht, da die Doppeladern optisch deutlich voneinander getrennt sind und somit vom Monteur die Zugehörigkeiten schnell erkannt werden können.

Um die Einsatzmöglichkeiten und die Flexibilität des Anschlußmodules weiter zu erhöhen, können nach einer weiteren Ausbildung der Erfindung an der Unterseite des Gehäuses zusätzlich Rastmöglichkeiten vorgesehen sein, die eine Befestigung des Anschlußmodules an einer Bodenplatte ermöglichen. Dies können entweder angeformte Rastnasen sein, die in Aussparungen einer ebenen Bodenplatte einrasten, oder auch Vorsprünge, in die entsprechende Rastnasen eingreifen können.

Ferner wird bevorzugt, daß das Gehäuse an zwei gegenüberliegenden Außenwänden eine Verbindungseinrichtung aufweist, die ein Ankoppeln eines weiteren Anschlußmodules auch ohne Profilschiene ermöglicht. Dadurch, daß das Gehäuse eine weitere Verbindungseinrichtung aufweist, die ein Ankoppeln der Anschlußmodule auch ohne Profilschiene ermöglicht, ist einerseits für eine schnelle und einfache Anreihbarkeit gesorgt, andererseits läßt sich das erfindungsgemäße Anschlußmodul wesentlich flexibler einsetzen, da die aneinander angereihten Anschlußmodule mit Hilfe eines Endstückes als Block auf einfache Weise an jeder gewünschten Stelle befestigt werden können, ohne daß eine Profilschiene vorgesehen sein muß.

In vorteilhafter Weise kann die Verbindungseinrichtung eine sich verjüngende Nut und ein darin eingreifendes Koppelelement aufweisen. Hierdurch lassen sich die erfindungsgemäßen Anschlußmodule auf einfache Weise dadurch miteinander koppeln, daß das Koppelelement in die sich verjüngende Nut, z.B. eine Schwalbenschwanznut oder dergleichen, eingesetzt wird. Hierbei kann das Koppelelement ein zu der Nut komplementärer Vorsprung sein, der an einer Seite des Anschlußmodules an das Gehäuse angeformt ist. Vorzugsweise ist jedoch das Koppelelement ein separater und profilierter Verbindungssteg, der in die Nuten zweier benachbarter Module koppelnd einsetzbar ist. Hierdurch lassen sich die einzelnen Anschlußmodule auf einfache Weise dadurch miteinander koppeln, daß der profilierte Verbindungssteg in die Nuten zweier benachbarter Module eingeschoben wird.

Nach einer weiteren Ausbildung der Erfindung können in dem Gehäuse des Anschlußmoduls Kontaktierungsmöglichkeiten für eine Schirm- und/oder Erdkontaktierung eines Telekommunikationskabels vorgesehen sein.

Nach einer besonders vorteilhaften Ausführungsform sind in dem Gehäuse derart beabstandete Öffnungen vorgesehen, daß für eine Ader in das Anschlußmodul gleichzeitig von oben verschiedene Elemente eingesteckt werden können. Insbesondere können ein Trenn-, Prüf- oder Feinschutzstecker in eine Trennstelle, ein Überspannungsgasableiter in die Ausnehmung und ein Prüfabschluß in den gegenüberliegenden Schneidklemmkontakt eingesetzt werden, wobei das Modul mit den aufgesteckten Bauteilen mit Hilfe eines Anlegewerkzeuges beschaltbar bleibt. Hierdurch zeigt sich, daß ein solches Anschlußmodul aufgrund seines Aufbaus und der beabstandet vorgesehenen Öffnungen sämtliche wünschenswerten Kontaktierungsmöglichkeiten gleichzeitig gewährleistet.

Der in dem Gehäuse vorgesehene Anschlußkontakt, der zur ankommenden und abgehenden Kontaktierung jeweils einer Ader dient, kann vorteilhafterweise einstückig ausgebildet sein und in der genannten Reihenfolge folgende Kontaktierungen aufweisen: einen Schneidklemmkontakt, eine Kontaktstelle mit zwei Kontaktbügeln, zwei Kontakte für Überspannungsgasableiter und einen weiteren Schneidklemmkontakt. Durch die einstückige Ausbildung eines solchen Anschlußkontaktes lassen sich die Herstellungskosten erheblich senken, wobei der Anschlußkontakt gleichzeitig für sämtliche Test-, Prüf- oder Montagezwecke geeignet ist.

Sofern der Anschlußkontakt im Bereich der Kontaktschenkel einen abtrennbaren Verbindungsstreifen aufweist, läßt sich der Anschlußkontakt durch Abtrennen dieses Verbindungsstreifens auf einfache Weise zu einem Trennkontakt ausbilden.

Ferner wird bevorzugt, daß die Öffnung für die Trennstelle bei der entsprechenden Ausführungsform mit einer Kappe verschlossen ist, die nicht zerstörungsfrei geöffnet werden kann.

Nach einer weiteren vorteilhaften Ausbildung der Erfindung besteht eine Vorrichtung aus mindestens zwei erfindungsgemäßen Anschlußmodulen und weist einen im wesentlichen U-förmigen Verbindungsbügel auf, der von oben auf die Erdkontakte zweier benachbarter Module aufsteckbar ist. Hierdurch lassen sich aneinander angereihte Anschlußmodule über deren Erdkontakte auch dann auf einfache Weise von oben miteinander elektrisch verbinden, wenn keine leitende Profilschiene vorgesehen ist und wenn die Anschlußmodule bereits aneinander angereiht sind.

Für eine Vorrichtung bestehend aus mindestens zwei nebeneinander angeordneten Anschlußmodulen wird bevorzugt, daß diese mit ihren jeweiligen Außenwänden ohne Abstand aneinander anliegen.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: eine Aufsicht auf ein Anschlußmodul gemäß der Erfindung, wobei ein 3-Pol-Überspannungsgasableiter in das Anschlußmodul eingesetzt ist und die Anschlußkontakte nicht dargestellt sind;
- Fig. 2: eine Querschnittsansicht durch das Anschlußmodul von Fig. 1 entlang der Linie II-II, wobei zusätzlich eine kontaktierte Ader und ein Trennstecker dargestellt sind;
- Fig. 3: eine Querschnittsansicht durch das Anschlußmodul von Fig. 1 entlang der Linie III-III, jedoch ohne eingesetzten Überspannungsgasableiter;
- Fig. 4A: einen zum Trennkontakt umgewandelten Anschlußkontakt;
- Fig. 4B: einen Anschlußkontakt; und
- Fig. 5: eine Seitenansicht des Anschlußmoduls von Fig. 1 aus der Richtung V, in das von oben ein passiver Prüfabschluß, ein Feinschutzstecker sowie ein Anlegewerkzeug eingeführt sind.

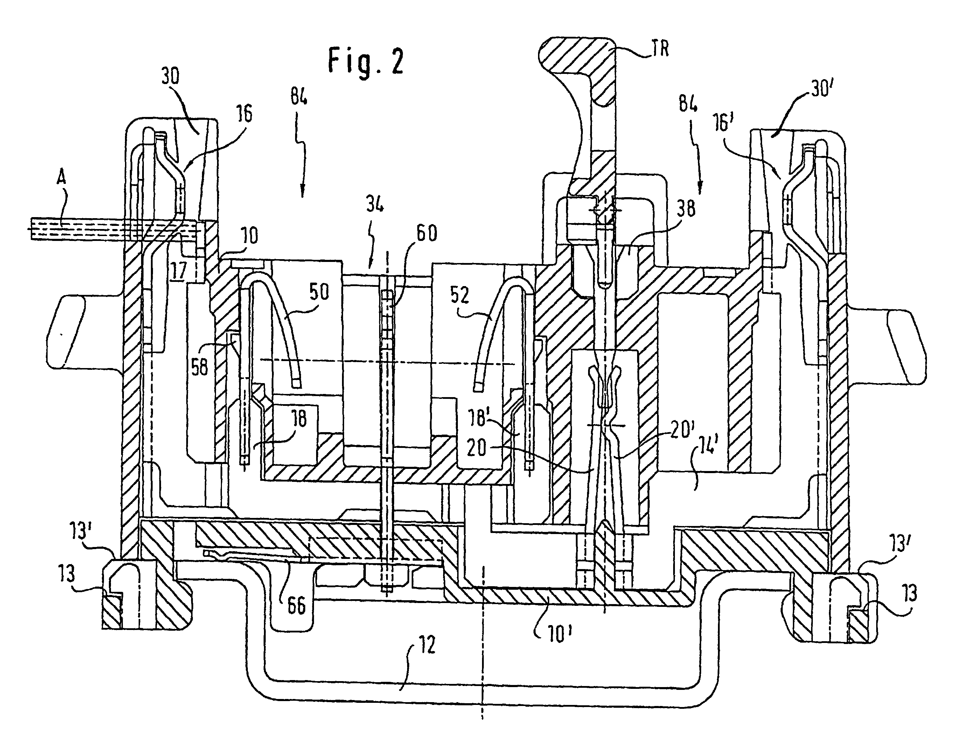

Das Anschlußmodul gemäß der Erfindung weist ein Gehäuse auf, das zweiteilig ausgebildet ist und ein Oberteil 10 sowie ein Unterteil 10' umfaßt, die durch Rastverbindungen miteinander verriegelt sind. An seiner Unterseite weist das Gehäuseunterteil 10' eine Rastmöglichkeit auf, um das Gehäuse auf eine Profilschiene 12 aufzurasten (vgl. Fig. 2).

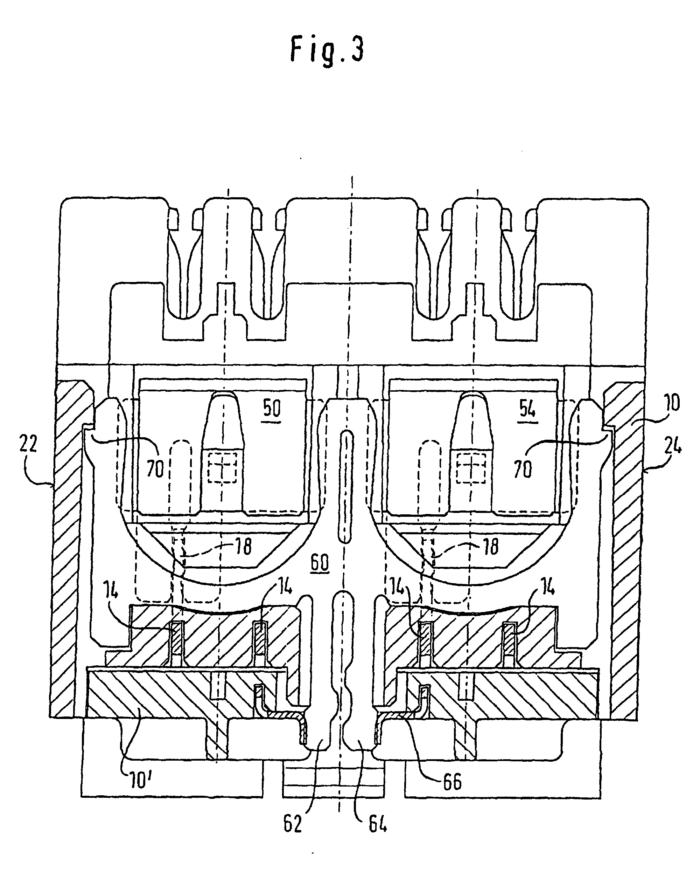

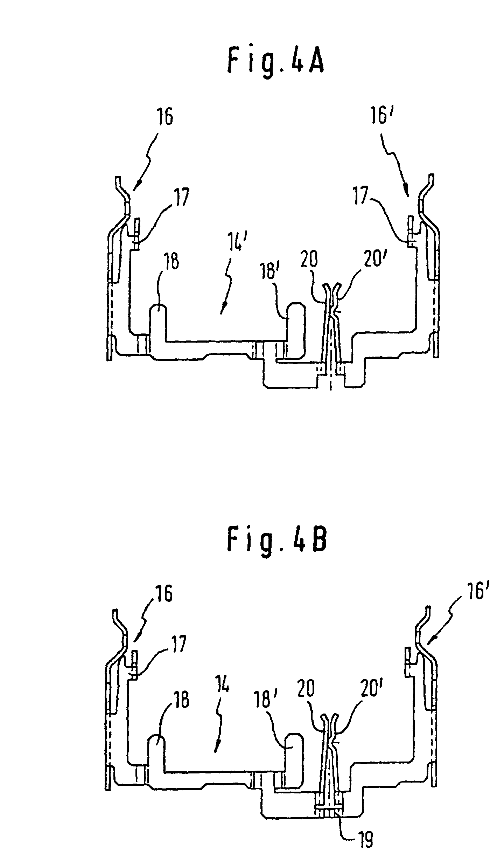

Wie die Figuren zeigen, sind in dem Gehäuse insgesamt vier Anschlußkontakte 14' (vgl. Fig. 3 und 4A) vorgesehen, die insgesamt zwei Doppeladern kontaktieren können. Fig. 4B zeigt den Aufbau eines ähnlichen, jedoch einstückig ausgebildeten Anschlußkontaktes 14, der an seinen beiden Enden jeweils einen Schneidklemmkontakt 16 und 16' aufweist. Zwischen diesen Schneidklemmkontakten 16 und 16' sind einerseits zwei Kontaktzungen 18 und 18' sowie Kontaktbügel 20 und 20' einer Kontaktstelle vorgesehen. Die beiden Kontaktschenkel werden dabei durch einen Verbindungsstreifen oder eine Verbindungsschlaufe 19 überbrückt.

In Fig. 4A ist der Anschlußkontakt 14' dargestellt, der im wesentlichen dem Anschlußkontakt 14 von Fig. 4B entspricht. Die Kontaktstelle, die durch die Kontaktbügel 20, 20' des Anschlußkontaktes 14' gebildet wird, ist jedoch keine Anschluß- bzw. Abgreifstelle sondern eine Trennstelle, da der bei dem Anschlußkontakt 14 vorhandene Verbindungsstreifen 19 bei dem Anschlußkontakt 14' entfernt ist. Dadurch wird durch Trennen der Kontaktbügel 20, 20' ein Auftrennen der Verbindung zwischen den Schneidklemmkontakten 16 und 16' eines Anschlußkontaktes 14' ermöglicht.

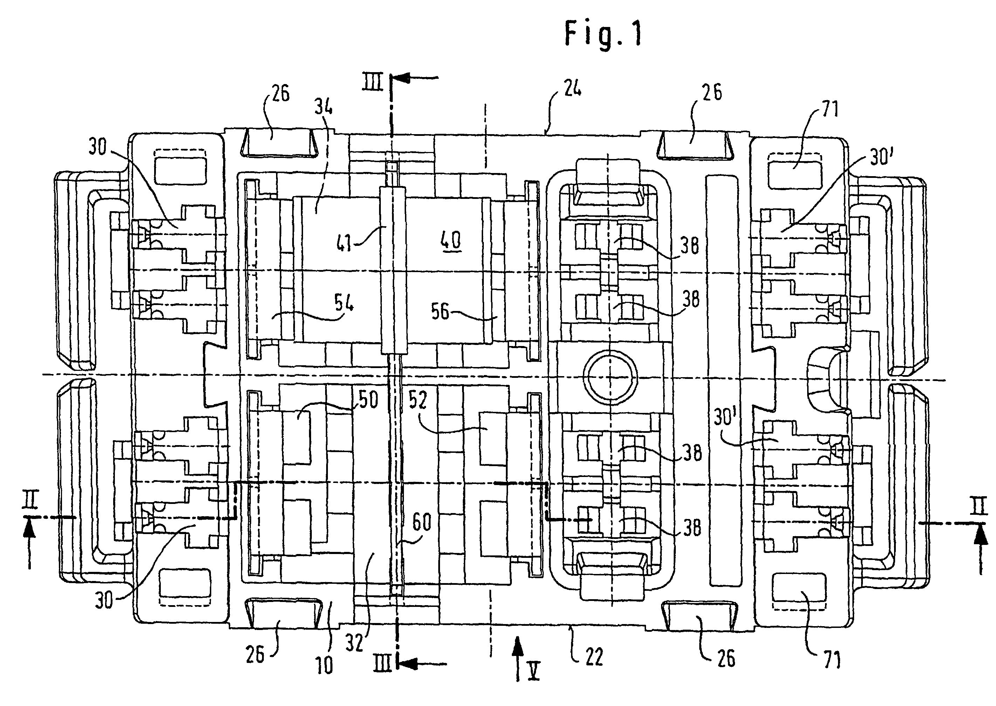

Wie die Fig. 1 und 2 zeigen, ist jeder Anschlußkontakt 14 so ausgebildet, daß seine entgegengesetzt gegenüberliegenden Schneidklemmkontakte 16 und 16', die zur ankommenden und abgehenden Kontaktierung jeweils einer Einzelader dienen, auf einer Geraden angeordnet sind, die parallel zu den Außenwänden 22, 24 des Gehäuses 10 verläuft. Die Anschlußkontakte 14 sind dabei so in dem Gehäuse angeordnet, daß jeweils zwei Anschlußkontakte 14 einen geringeren gegenseitigen Abstand aufweisen und jeweils ein Anschlußkontaktpaar einen demgegenüber größeren Abstand aufweist.

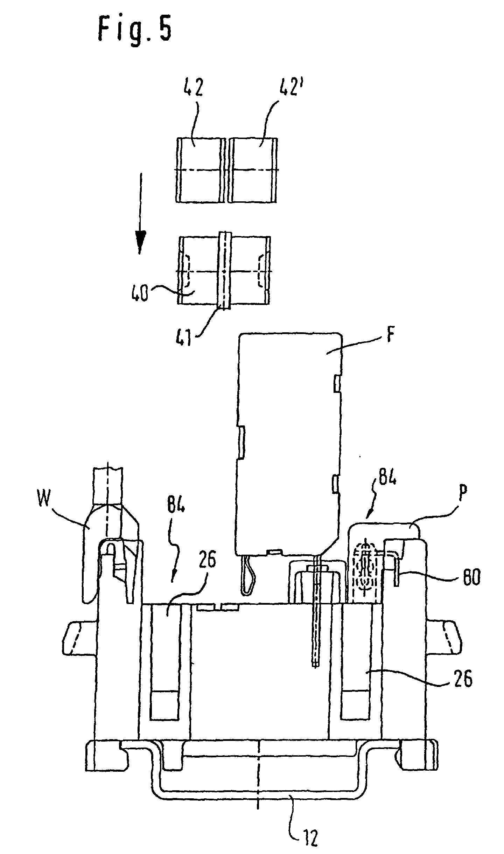

Wie insbesondere die Fig. 1 und 2 zeigen, weist das Gehäuse mehrere Öffnungen auf, die sich von oben in das Gehäuseinnere öffnen. Durch die Öffnungen 30 und 30' läßt sich jeweils eine ankommende bzw. abgehende Einzelader A (vgl. Fig. 2) in einen zugehörigen Schneidklemmkontakt 16 bzw. 16' einlegen und mit Hilfe eines Anlegewerkzeuges W (Fig. 5) kontaktieren, dessen Werkzeugkopf durch diese Öffnungen 30, 30' eingeführt wird.

Weitere Gehäuseöffnungen 32, 34 dienen dazu, Überspannungsgasableiter in das Innere des Gehäuses einzusetzen. Fig. 1 zeigt einen 3-Pol-Überspannungsgasableiter 40, der in die Gehäuseöffnung 34 eingesetzt ist. Die Gehäuseöffnungen bzw. die darunter befindlichen Ausnehmungen 32 und 34 weisen eine solche Größe auf, daß von oben entweder der beschriebene 3-Pol-Überspannungsgasableiter 40 oder alternativ zwei 2-Pol-Überspannungsgasableiter 42 und 42' (Fig. 5) in das Gehäuse eingesetzt werden können.

In Fig. 1 rechts von den Öffnungen 32 und 34 befinden sich weitere Gehäuseöffnungen 38, die ein Einstecken eines Trennsteckers TR (Fig. 2), eines Prüfsteckers oder eines Feinschutzsteckers F (Fig. 5) ermöglichen. Diese Stecker können die Kontaktstelle trennen, die durch die Kontaktbügel 20, 20' gebildet wird. In Fig. 2 ist die Ausführungsform dargestellt, bei der ein Trennstecker TR in die Kontaktstelle eingesteckt ist.

Fig. 2 zeigt, wie der Anschlußkontakt 14' (mit Trennstelle) in das Gehäuse 10, 10' eingesetzt ist. Hierbei dienen verschiedene Gehäusevorsprünge und -vertiefungen dazu, den Anschlußkontakt 14' sicher in dem Gehäuse zu halten. Zur Kontaktierung der Überspannungsgasableiter 40, 42, 42', welche in die Öffnungen 32, 34 eingesetzt werden können, dienen insgesamt vier Kontaktfedern 50, 52, 54 und 56, die mit jeweils einem der nebeneinanderliegenden Anschlußkontakte verbunden sind. Wie Fig. 2 zeigt, ist die Kontaktfeder 50 in die Zunge 18 des in Fig. 1 am weitesten unten liegenden Anschlußkontaktes 14' federnd und geklemmt eingesteckt, wohingegen die Kontaktfeder 52 in die Zunge 18' des in Fig. 1 darüber liegenden Anschlußkontaktes eingesteckt ist. Wie Fig. 2 ferner zeigt, sind die Kontaktfedern mit Widerhaken 58 versehen, die eine Gehäusekante anschlagen, um ein versehentliches Herausziehen der Kontaktfedern beim Entfernen eines Überspannungsgasableiters zu verhindern.

Zur Kontaktierung des Erdkontaktes 41 (Fig. 1 und 5) eines 3-Pol-Überspannungsgasableiters 40 ist ein flächiges Kontaktelement 60 vorgesehen, das am besten in Fig. 3 zu erkennen ist. Das flächige Kontaktelement 60 weist zwei nebeneinanderliegende, im wesentlichen U-förmige Öffnungen auf, in die jeweils ein Erdkontakt 41 (Fig. 5) eines 3-Pol-Überspannungsgasableiters 40 einsetzbar ist. Hierbei verjüngen sich die Schenkel des "U" ein wenig, so daß diese federnd an dem jeweiligen Erdkontakt 41 anliegen. Nach Einsetzen zweier Überspannungsableiter 40 in die Öffnungen 32 und 34 (Fig. 1) berühren die beiden äußeren Kontakte des Überspannungsableiters jeweils die äußeren Kontaktfedern 50, 52 bzw. 54, 56. Der mittlere Erdkontakt 41 ist dabei in den Öffnungen des Kontaktelementes 60 aufgenommen, so daß eine elektrisch leitende Verbindung zwischen diesen Erdkontakten 41 und einem Erdanschluß hergestellt ist. Somit ist jede an einem Schneidklemmkontakt 16, 16' kontaktierte Ader über eine Überspannungsgasableiterkammer mit der Erde verbunden.

Wie Fig. 3 zeigt, ist das Kontaktelement 60 an seiner Unterseite mit zwei mittigen Federschenkeln 62, 64 versehen, die wiederum gegen einen Erdkontakt 66 federnd andrücken, der an der Gehäuseunterseite in einer Rastaufnahme gehalten ist.

Wie Fig. 2 zeigt, stellt der Erdkontakt 66 eine elektrisch leitende Verbindung zwischen dem Federkontakt 60 und der Profilschiene 12 dar, die geerdet ist.

Sofern die Anschlußmodule nicht auf einer Profilschiene oder einer geerdeten Schiene befestigt werden, ist ein (nicht dargestellter) im wesentlichen U-förmiger Verbindungsbügel vorgesehen, der mit jeweils einem Schenkel von oben auf zwei Kontaktelemente 60 von nebeneinanderliegenden Anschlußmodulen aufsteckbar ist. Hierdurch werden diese Kontaktfedern elektrisch miteinander verbunden, und es kann eine weitere Verbindung zu einem Erdkontakt hergestellt werden.

Sofern in eine der Öffnungen 32, 34 nicht ein 3-Pol-Überspannungsableiter sondern zwei 2-Pol-Überspannungsableiter 42, 42' (Fig. 5) eingesetzt werden, wird anstelle des Kontaktelementes 60 alternativ ein ähnlich ausgestaltetes Kontaktelement (nicht dargestellt) verwendet, das keine U-förmigen Öffnungen aufweist, sondern dort durchgehend ausgebildet ist. Hierdurch können insgesamt vier 2-Pol-Überspannungsgasableiter 42, 42' mit ihren Kontaktflächen an diesem Kontaktelement anliegen. Dieses Kontaktelement kann in gleicher Weise mit Widerhaken 70 (Fig. 3) versehen sein, wie es das Kontaktelement 60 ist, um gegen eine Gehäusekante anzuschlagen und ein Herauslösen zu verhindern.

Um mehrere Anschlußmodule auch dann miteinander verbinden zu können, wenn keine Profilschiene oder keine Möglichkeiten vorgesehen sind, um das Anschlußmodul auf eine Grundplatte oder dergleichen aufzurasten, weist das erfindungsgemäße Anschlußmodul an seinen beiden gegenüberliegenden Außenwänden 22 und 24 jeweils zwei sich verjüngende Nuten 26 auf, die im Querschnitt schwalbenschwanzförmig ausgebildet sind. Zur Verbindung zweier nebeneinander angeordneter Anschlußmodule ist ein separater und komplementär profilierter Verbindungssteg (nicht dargestellt) vorgesehen, der im Querschnitt eine doppelte Schwalbenschwanzform besitzt und der in die Nuten 26 zweier nebeneinanderliegender Anschlußmodule verbindend eingeschoben werden kann. Hierauf sind zwei benachbarte Anschlußmodule fest miteinander gekoppelt und liegen mit ihren jeweiligen Außenwänden 22, 24 ohne Abstand aneinander an.

An den beiden verbleibenden Außenwänden des Anschlußmodules sind jeweils zwei L-förmige Drahtführungshaken angeformt. Ferner sind Aufrastmöglichkeiten 71 (Fig. 1) für Bezeichnungsstreifenhalter vorgesehen.

Am Gehäuseunterteil 10' sind zusätzlich verschiedene Rastmöglichkeiten 13, 13' (Fig. 2) vorgesehen, um eine Befestigung an einer Bodenplatte oder dergleichen mittels angedeuteter Rastnasen zu ermöglichen.

Die in den Figuren dargestellten Schneidklemmkontakte dienen einer Doppelfunktion. Einerseits werden die Schneidklemmkontakte zum Anschalten der jeweiligen Adern verwendet. Andererseits dienen diese jedoch als weitere Kontaktierungsmöglichkeit für die Kontaktfeder 80 eines Prüfabschlusses P, die durch die Öffnung 30 auf den Schneidklemmkontakt aufgesteckt werden kann (vgl. Fig. 5). Zur Aufnahme des Prüfabschlusses P weist das Gehäuse 10, 10' hinter jedem Schneidklemmkontakt 16 einen Freiraum 84 auf. Gleichzeitig ist der Freiraum 84 in einem solchen Abstand zu der Öffnung 38 für den Trennstecker angeordnet, daß gleichzeitig Prüfabschluß P und Trennstecker TR (Fig. 2) oder ein Feinschutzstecker F (Fig. 5) eingesteckt werden können.

Die Öffnungen 38 für die Trennstelle können mit zwei Kappen (nicht dargestellt) verschlossen werden, die nicht zerstörungsfrei geöffnet werden können. Hierdurch lassen sich unerlaubte Manipulationen an den Trennstellen erkennen.

## Patentansprüche

1. Anschlussmodul für die Telekommunikationstechnik, mit einem Gehäuse (10, 10'), in dem Anschlusskontakte (14, 14') für ein ankommendes und abgehendes Kontaktieren von mehreren Doppeladern vorgesehen sind, und in dem zumindest eine Ausnehmung (32, 34) vorgesehen ist, die eine solche Größe aufweist, dass von oben entweder ein 3-Pol-Überspannungsgasableiter (40) oder alternativ zwei 2-Pol-Überspannungsgasableiter (42, 42') einsetzbar sind, und in der Kontaktelemente (50, 52, 54, 56) vorgesehen sind, so dass entweder ein 3-Pol-Überspannungsableiter (40) oder alternativ zwei 2-Pol-Überspannungsableiter (42, 42') direkt kontaktierbar sind,
**dadurch gekennzeichnet, dass** ein Erdkontakt im Gehäuse (10,10') vorgesehen ist und mittig in der zumindest einen Ausnehmung (32, 34) ein Kontaktelement (60) lösbar an dem Erdkontakt (66) angeordnet ist, so dass ein- und dasselbe Anschlussmodul durch Austausch des lösbaren Kontaktelementes durch ein weiteres lösbares Kontaktelement für unterschiedliche Überspannungsgasableiter Verwendung finden kann.

2. Anschlußmodul nach Anspruch 1, **dadurch gekennzeichnet, daß** das lösbare Kontaktelement (60) flächig ist und zwei nebeneinanderliegende, im wesentlichen U-förmige Öffnungen aufweist, in die jeweils ein 3-Pol-Überspannungsgasableiter (40) mit seinem Erdkontakt (41) einsetzbar ist, um eine leitende Verbindung zwischen den beiden Erdkontakten (41) der nebeneinanderliegenden Überspannungsgasableiter herzustellen, oder daß alternativ ein flächiges Kontaktelement ohne Öffnungen vorgesehen ist, um insgesamt vier 2-Pol-Überspannungsgasableiter (42, 42') zu kontaktieren.

3. Anschlußmodul nach Anspruch 1 oder 2, **dadurch gekennzeichnet, daß** in dem Gehäuse (10, 10') Anschlußkontakte (14, 14') zum Kontaktieren von insgesamt zwei Doppeladern angeordnet sind.

4. Anschlußmodul nach zumindest einem der vorstehenden Ansprüche, **dadurch gekennzeichnet, daß** an einem Anschlußkontakt (14, 14') zwischen zwei Schneidklemmkontakten (16, 16') für eine Ader (A) zwei Kontaktzungen (18, 18') vorgesehen sind, auf die jeweils eine Kontaktfeder (50, 52, 54, 56) zur Kontaktierung eines Überspannungsgasableiters aufsteckbar ist.

5. Anschlußmodul nach zumindest einem der vorstehenden Ansprüche, **dadurch gekennzeichnet, daß** an der Gehäuseunterseite eine Rastaufnahme für eine Erdkontaktfeder (66) vorgesehen ist.

6. Anschlußmodul nach zumindest einem der vorstehenden Ansprüche, **dadurch gekennzeichnet, daß** der Anschlußkontakt (14, 14') zumindest einen Schneidklemmkontakt (16, 16') aufweist und dieser sowie das Gehäuse (10, 10') derart ausgebildet sind, daß auf diesen auch bei geklemmter Ader (A) von oben eine Kontaktfeder (80) eines Prüfabschlusses (P) aufsteckbar ist, und daß das Gehäuse (10, 10') hinter diesem Schneidklemmkontakt (16, 16') einen Freiraum (84) zur Aufnahme des Prüfabschlusses (P) aufweist.

7. Anschlußmodul nach Anspruch 6, **dadurch gekennzeichnet, daß** der Prüfabschluß (P) auch bei eingesetztem Überspannungsgasableiter in den Freiraum (84) einsetzbar ist.

8. Anschlußmodul nach zumindest einem der vorstehenden Ansprüche, **dadurch gekennzeichnet, daß** im Gehäuse eine Öffnung (38) für den Zugang zu einer Trenn- oder Anschlußstelle vorgesehen ist, die sich zwischen zwei gegenüberliegenden Schneidklemmkontakten (16, 16') befindet, wobei die Öffnung (38) vorzugsweise in einem Abstand zu dem Freiraum (84) ausgebildet ist.

9. Anschlußmodul nach zumindest einem der vorstehenden Ansprüche, **dadurch gekennzeichnet, daß** der Anschlußkontakt (14, 14') zwei Schneidklemmkontakte (16, 16') für jede Einzelader (A) aufweist, die auf einer Geraden angeordnet sind, die parallel zu den beiden Außenwänden (22, 24) verläuft.

10. Anschlußmodul nach zumindest einem der vorstehenden Ansprüche, **dadurch gekennzeichnet, daß** die Anschlußkontakte (14,14') je zwei Schneidklemmkontakte aufweisen und der Abstand zwischen zwei Schneidklemmkontakten einer Doppelader und der Abstand zwischen zwei benachbarten Schneidklemmkontakten zweier Doppeladern eines Moduls unterschiedlich groß ist.

11. Anschlußmodul nach zumindest einem der vorstehenden Ansprüche, **dadurch gekennzeichnet, daß** das Gehäuse (10, 10') an seiner Unterseite eine Rastmöglichkeit (13, 13') für die Befestigung an einer Bodenplatte mittels Rastnasen aufweist.

12. Anschlußmodul nach zumindest einem der vorstehenden Ansprüche, **dadurch gekennzeichnet, daß** das Gehäuse an seiner Unterseite eine Rastmöglichkeit zum Aufrasten auf eine Profilschiene (12) aufweist, und daß das Gehäuse (10, 10') an zwei gegenüberliegenden Außenwänden (22, 24) eine Verbindungseinrichtung (26, 28) aufweist, die ein Ankoppeln eines weiteren Anschlußmodules auch ohne Profilschiene (12) ermöglicht.

13. Anschlußmodul nach Anspruch 12, **dadurch gekennzeichnet, daß** die Verbindungseinrichtung eine sich verjüngende Nut (26) und ein darin eingreifendes Koppelelement (28) aufweist.

14. Anschlußmodul nach Anspruch 13, **dadurch gekennzeichnet, daß** das Koppelelement ein an ein Anschlußmodul angeformter, komplementärer Vorsprung ist, oder vorzugsweise ein separater und profilierter Verbindungssteg (28), der in die Nuten (26) zweier benachbarter Module koppelnd einsetzbar ist.

15. Anschlußmodul nach zumindest einem der vorstehenden Ansprüche, **dadurch gekennzeichnet, daß** in dem Gehäuse (10, 10') eine Kontaktierungsmöglichkeit für eine Schirm- und Erdkontaktierung eines Telekommunikationskabels vorgesehen ist.

16. Anschlußmodul nach zumindest einem der vorstehenden Ansprüche, **dadurch gekennzeichnet, daß** in dem Gehäuse (10, 10') derart beabstandete Öffnungen (30', 38, 32, 34, 30) vorgesehen sind, daß für eine Ader in das Anschlußmodul gleichzeitig von oben ein Trenn- (TR), Prüf-, oder Feinschutzstecker (F) in eine Trennstelle, ein Überspannungsgasableiter (40, 42, 42') in die Ausnehmung und ein Prüfabschluß (P) in den gegenüberliegenden Schneidklemmkontakt (16) eines Anschlußkontaktes (14, 14') einsetzbar sind, und wobei gleichzeitig ein Schneidklemmkontakt (16') beschaltbar ist.

17. Anschlußmodul nach zumindest einem der vorstehenden Ansprüche, **dadurch gekennzeichnet, daß** in dem Gehäuse (10, 10') ein einstückiger Anschlußkontakt (14) für jeweils eine Ader (A) vorgesehen ist, der in der genannten Reihenfolge die folgenden Kontaktierungen ausgebildet hat: einen Schneidklemmkontakt (16'), eine Kontaktstelle mit zwei Kontaktbügeln (20, 20'), zwei Kontakte (18', 18) für Überspannungsgasableiter (40, 42, 42') und einen weiteren Schneidklemmkontakt (16).

18. Anschlußmodul nach Anspruch 17, **dadurch gekennzeichnet, daß** der Anschlußkontakt (14) im Bereich der Kontaktschenkel (20, 20') einen abtrennbaren Verbindungsstreifen (19) aufweist, um die Kontaktstelle zu einem Trennkontakt auszubilden.

19. Anschlußmodul nach Anspruch 8, **dadurch gekennzeichnet, daß** die Öffnung (38) für die Trennstelle mit einer Kappe verschlossen ist, die nicht zerstörungsfrei geöffnet werden kann.

20. Vorrichtung mit mindestens zwei nebeneinander angeordneten Anschlußmodulen nach zumindest einem der vorstehenden Ansprüche, **dadurch gekennzeichnet, daß** diese einen im wesentlichen U-förmigen Verbindungsbügel aufweist, der von oben auf die lösbaren Kontaktelemente (60) zweier benachbarter Anschlußmodule aufsteckbar ist.

21. Vorrichtung mit mindestens zwei nebeneinander angeordneten Anschlußmodulen nach einem der vorstehenden Ansprüche, **dadurch gekennzeichnet, daß** diese mit ihren jeweiligen Außenwänden (22, 24) ohne Abstand aneinander anliegen.

## Claims

1. Connection module for telecommunications technology, with a housing (10, 10') in which connection contacts (14, 14') are provided for an incoming and outgoing contacting of a plurality of twin wires, and in which at least one recess (32, 34) is provided, which has such a size that, from above, there can be inserted either a 3-pole surge voltage gas arrester (40) or alternatively two 2-pole surge voltage gas arresters (42, 42'), and in which recess contact elements (50, 52, 54, 56) are provided so that either one 3-pole surge voltage arrester (40) or alternatively two 2-pole surge voltage arresters (42, 42') are directly contactable,
***characterised in that***
one earth contact is provided in the housing (10, 10') and one contact element (60) is disposed detachably at the earth contact (66) centrally in at least the one recess (32, 34), so that one and the same connection module can be used for different surge voltage gas arresters by means of exchanging the detachable contact element for a further detachable contact element.

2. Connection module according to claim 1, **characterised in that** the detachable contact element (60) is planar and has two substantially U-shaped openings which are situated adjacent to each other, in which openings respectively one 3-pole surge voltage gas arrester (40) with its earth contact (41) can be inserted, in order to produce a conductive connection between the two earth contacts (41) of the surge voltage gas arresters which are situated adjacent to each other, or **in that** alternatively one planar contact element without openings is provided, in order to contact four 2-pole surge voltage gas arresters (42, 42') in total.

3. Connection module according to claim 1 or 2, **characterised in that** connection contacts (14, 14') are disposed in the housing (10, 10') in order to contact two twin wires in total.

4. Connection module according to at least one of the preceding claims, **characterised in that** two contact studs (18, 18') are provided on a connection contact (14, 14') between two insulation displacement contacts (16, 16') for a wire (A), on which studs respectively one contact spring (50, 52, 54, 56) can be plugged-in for contacting of a surge voltage gas arrester.

5. Connection module according to at least one of the preceding claims, **characterised in that** a catching receiving means for an earth contact spring (66) is provided on the housing underside.

6. Connection module according to at least one of the preceding claims **characterised in that** the connection contact (14, 14') has at least one insulation displacement contact (16, 16') and the latter and also the housing (10, 10') are configured such that, even in the case of a cramped wire (A), a contact spring (80) of a test closure (P) can be plugged-in from above on said insulation displacement contact, and **in that** the housing (10, 10') has a free space (84) behind this insulation displacement contact (16, 16') for receiving the test closure (P).

7. Connection module according to claim 6, **characterised in that** the test closure (P) can be inserted into the free space (84) even when a surge voltage gas arrester is inserted.

8. Connection module according to at least one of the preceding claims, **characterised in that** one opening (38) is provided in the housing for access to a separation or connection point which is situated between two oppositely situated insulation displacement contacts (16, 16'), the opening (38) preferably being configured at a spacing to the free space (84).

9. Connection module according to at least one of the preceding claims, **characterised in that** the connection contact (14, 14') has two insulation displacement contacts (16, 16') for each individual wire (A), which contacts are disposed on a straight line which extends parallel to the two exterior walls (22, 24).

10. Connection module according to at least one of the preceding claims, **characterised in that** the connection contacts (14, 14') have respectively two insulation displacement contacts and the spacing between two insulation displacement contacts of a twin wire and the spacing between two adjacent insulation displacement contacts of two twin wires of a module is of a different size.

11. Connection module according to at least one of the preceding claims, **characterised in that** the housing (10, 10') has a catching possibility (13, 13') on its underside for securing to a base plate by means of catching projections.

12. Connection module according to at least one of the preceding claims, **characterised in that** the housing has a catching possibility on its underside for catching onto a profile rail (12), and **in that** the housing (10, 10') has a connection device (26, 28) on two oppositely situated exterior walls (22, 24), which device makes possible coupling of a further connection module even without a profile rail (12).

13. Connection module according to claim 12, **characterised in that** the connection device has a tapering groove (26) and a coupling element (28) which engages therein.

14. Connection module according to claim 13, **characterised in that** the coupling element is a complementary projection which is moulded onto a connection module, or preferably is a separate and profiled connection web (28) which can be inserted into the grooves (26) of two adjacent modules so as to form a coupling.

15. Connection module according to at least one of the preceding claims, **characterised in that** a contacting possibility for a shielding and earth contacting of a telecommunications cable is provided.

16. Connection module according to at least one of the preceding claims, **characterised in that** openings (30', 38, 32, 34, 30) are provided in the housing (10, 10') which are spaced such that, for one wire, there can be inserted simultaneously from above into the connection module a separation- (TR), test- or fine protection plug (F) into a separation point, a surge voltage gas arrester (40, 42, 42') into the recess and a test closure (P) into the oppositely situated insulation displacement contact (16) of a connection contact (14, 14'), and an insulation displacement contact (16') being able to be wired at the same time.

17. Connection module according to at least one of the preceding claims, **characterised in that** a one-piece connection contact (14) is provided in the housing (10, 10') for respectively one wire (A) which has formed the following contactings in the mentioned sequence: an insulation displacement contact (16'), a contact point with two sliding bows (20, 20'), two contacts (18, 18') for surge voltage gas arresters (40, 42, 42') and a further insulation displacement contact (16).

18. Connection module according to claim 17, **characterised in that** the connection contact (14) has a separable connection strip (19) in the region of the contact legs (20, 20') in order to form the contact point to a separation contact.

19. Connection module according to claim 8, **characterised in that** the opening (38) for the separation point is closed with a cap which cannot be opened non-destructively.

20. Device with at least two adjacently disposed connection modules according to at least one of the preceding claims, **characterised in that** this device has a substantially U-shaped union bow, which can be plugged-in from above onto the detachable contact elements (60) of two adjacent connection modules.

21. Device with at least two adjacently disposed connection modules according to one of the preceding claims, **characterised in that** these abut on each other by their respective exterior walls (22, 24) with no spacing.

## Revendications

1. Module de raccordement pour télécommunication, avec un boîtier (10, 10') dans lequel il est prévu des contacts de raccordement (14, 14') pour la connexion de plusieurs conducteurs doubles en entrée et en sortie, dans lequel il est prévu au moins un évidement (32, 34) dont la taille permet d'introduire par le haut soit un parafoudre à gaz tripolaire (40), soit en variante deux parafoudres à gaz bipolaires (42, 42'), et dans lequel il est prévu des éléments de contact (50, 52; 54, 56) permettant de connecter directement soit un parafoudre tripolaire (40), soit en variante deux parafoudres bipolaires (42, 42'), **caractérisé en ce qu'**il est prévu un contact de mise à la terre dans le boîtier (10, 10') et **en ce que**, au centre de l'évidement (32, 34) au nombre de un au moins, un élément de contact (60) est disposé de manière amovible sur le contact de mise à la terre (66) de façon à permettre l'utilisation d'un seul et même module de raccordement pour des parafoudres à gaz différents, en remplaçant l'élément de contact amovible par un autre élément de contact amovible.

2. Module de raccordement selon la revendication 1, **caractérisé en ce que** l'élément de contact amovible (60) est plan et présente deux ouvertures adjacentes sensiblement en forme de U dans chacune desquelles un parafoudre à gaz tripolaire (40) avec son contact de mise à la terre (41) peut être introduit afin de réaliser une liaison conductrice entre les deux contacts de mise à la terre (41) des parafoudres à gaz adjacents, ou **en ce qu'**il est prévu en variante un élément de contact plan sans ouvertures afin de connecter au total quatre parafoudres à gaz bipolaires (42, 42').

3. Module de raccordement selon la revendication 1 ou 2, **caractérisé en ce que** des contacts de raccordement (14, 14') sont disposés dans le boîtier (10, 10') afin de connecter au total deux conducteurs doubles.

4. Module de raccordement selon l'une au moins des revendications précédentes, **caractérisé en ce que**, sur un contact de raccordement (14, 14') entre deux contacts à borne guillotine (16, 16') pour un conducteur (A), il est prévu deux languettes de contact (18, 18') sur chacune desquelles un ressort de contact (50, 52, 54, 56) peut être enfiché afin de connecter un parafoudre à gaz.

5. Module de raccordement selon l'une au moins des revendications précédentes, **caractérisé en ce qu'**il est prévu sur le dessous du boîtier un réceptacle à encliquetage pour un ressort de contact de mise à la terre (66).

6. Module de raccordement selon l'une au moins des revendications précédentes, **caractérisé en ce que** le contact de raccordement (14, 14') présente au moins un contact à borne guillotine (16, 16'), **en ce que** celui-ci ainsi que le boîtier (10, 10') sont réalisés de façon à pouvoir enficher par le haut, même lorsque le conducteur (A) est serré, un ressort de contact (80) d'une prise de test (P) et **en ce que** le boîtier (10, 10') présente à l'arrière de ce contact à borne guillotine (16, 16') un espace libre (84) pour recevoir la prise de test (P).

7. Module de raccordement selon la revendication 6, **caractérisé en ce que** la prise de test (P) peut être introduite dans l'espace libre (84) même lorsqu'un parafoudre à gaz est en place.

8. Module de raccordement selon l'une au moins des revendications précédentes, **caractérisé en ce qu'**il est prévu dans le boîtier une ouverture (38) permettant d'accéder à un point de coupure ou de liaison qui se trouve entre deux contacts à borne guillotine (16, 16') opposés, l'ouverture (38) étant de préférence réalisée à une certaine distance de l'espace libre (84).

9. Module de raccordement selon l'une au moins des revendications précédentes, **caractérisé en ce que** le contact de raccordement (14, 14') présente pour chaque conducteur simple (A) deux contacts à borne guillotine (16, 16') qui sont disposés sur une ligne droite parallèle aux deux parois extérieures (22, 24).

10. Module de raccordement selon l'une au moins des revendications précédentes, **caractérisé en ce que** les contacts de raccordement (14, 14') présentent chacun deux contacts à borne guillotine et **en ce que** la distance entre deux contacts à borne guillotine d'un conducteur double et la distance entre deux contacts à borne guillotine voisins de deux conducteurs doubles d'un module sont de tailles différentes.

11. Module de raccordement selon l'une au moins des revendications précédentes, **caractérisé en ce que** le boîtier (10, 10') présente sur le dessous une possibilité d'encliquetage (13, 13') permettant la fixation sur une embase au moyen de tétons d'encliquetage.

12. Module de raccordement selon l'une au moins des revendications précédentes, **caractérisé en ce que** le boîtier présente sur le dessous une possibilité d'encliquetage pour la fixation sur un rail profilé (12) et **en ce que** le boîtier (10, 10') présente sur deux parois extérieures opposées (22, 24) un dispositif de liaison (26, 28) permettant le couplage d'un autre module de raccordement même sans l'aide d'un rail profilé (12).

13. Module de raccordement selon la revendication 12, **caractérisé en ce que** le dispositif de liaison présente une rainure (26) qui va en s'amincissant et un élément de couplage (28) qui s'engage dans celle-ci.

14. Module de raccordement selon la revendication 13, **caractérisé en ce que** l'élément de couplage est une saillie complémentaire formée d'un seul tenant avec le module de raccordement ou, de préférence, une nervure de liaison (28) séparée et profilée qui peut être introduite dans les rainures (26) de deux modules voisins de manière à les coupler.

15. Module de raccordement selon l'une au moins des revendications précédentes, **caractérisé en ce qu'**il est prévu dans le boîtier (10, 10') une possibilité de connexion pour un blindage et une mise à la terre d'un câble de télécommunications.

16. Module de raccordement selon l'une au moins des revendications précédentes, **caractérisé en ce qu'**il est prévu dans le boîtier (10, 10') des ouvertures (30', 38, 32, 34, 30) espacées de façon à permettre d'introduire par le haut en même temps dans le module de raccordement, pour un conducteur, une fiche de coupure (TR), de test ou de protection fine (F) dans un point de coupure, un parafoudre à gaz (40, 42, 42') dans l'évidement et une prise de test (P) dans le contact à borne guillotine (16) opposé d'un contact de raccordement (14, 14'), un contact à borne guillotine (16') pouvant être câblé en même temps.

17. Module de raccordement selon l'une au moins des revendications précédentes, **caractérisé en ce qu'**il est prévu dans le boîtier (10, 10'), pour chaque conducteur (A), un contact de raccordement d'un seul tenant (14) qui a réalisé dans l'ordre les connexions suivantes : un contact à borne guillotine (16'), un point de contact avec deux étriers (20, 20'), deux contacts (18', 18) pour des parafoudres à gaz (40, 42, 42') et un autre contact à borne guillotine (16).

18. Module de raccordement selon la revendication 17, **caractérisé en ce que** le contact de raccordement (14) présente dans la zone de la branche de contact (20, 20') une patte de connexion détachable (19) permettant de transformer un point de contact en un point de coupure.

19. Module de raccordement selon la revendication 8, **caractérisé en ce que** l'ouverture (38) d'accès au point de coupure est obturée par un capuchon qui ne peut pas être ouvert sans être détruit.

20. Dispositif avec au moins deux modules de raccordement selon l'une au moins des revendications précédentes juxtaposés, **caractérisé en ce qu'**il présente un étrier de liaison sensiblement en forme de U qui peut être enfiché par le haut sur les éléments de contact amovibles (60) de deux modules de raccordement voisins.

21. Dispositif avec au moins deux modules de raccordement selon l'une au moins des revendications précédentes juxtaposés, **caractérisé en ce que** ceux-ci sont en contact l'un avec l'autre sans espace par l'intermédiaire de leurs parois extérieures (22, 24) respectives.
